# EUROPÄISCHE PATENTSCHRIFT

(11) **EP 0 693 039 B1**
(45) Veröffentlichungstag und Bekanntmachung des Hinweises auf die Patenterteilung: **30.07.1997**
(21) Anmeldenummer: 94909085.6
(22) Anmeldetag: 28.02.1994
(51) Int. Cl.: C01B 15/10, C11D 17/00, C11D 3/39

(54) **UMHÜLLTE NATRIUMPERCARBONATPARTIKEL, VERFAHREN ZU DEREN HERSTELLUNG UND SIE EHTHALTENDE WASCH-, REINIGUNGS- UND BLEICHMITTELZUSAMMENSETZUNGEN**
ENCAPSULATED SODIUM PERCARBONATE PARTICLES, METHOD OF PRODUCING THEM, AND WASHING-AGENT, CLEANING-AGENT AND BLEACHING-AGENT COMPOSITIONS CONTAINING THEM
PARTICULES DE PERCARBONATE DE SODIUM ENROBEES, LEUR PROCEDE DE FABRICATION, ET COMPOSITIONS D'AGENTS DE LAVAGE, D'AGENTS DETERGENTS ET DE BLANCHIMENT LES RENFERMANT

(30) Priorität: 10.04.1993 DE 4311944
(43) Veröffentlichungstag der Anmeldung: 24.01.1996
(73) Patentinhaber: DEGUSSA AG, 60311 Frankfurt (DE)
(72) Erfinder: BERTSCH-FRANK, Birgit, D-79618 Rheinfelden (DE); KLASEN, Claas-Jürgen, D-63579 Freigericht (DE); LIESER, Thomas, D-63457 Hanau (DE); MÜLLER, Klaus, D-63594 Hasselroth (DE); BEWERSDORF, Martin, D-63571 Gelnhausen (DE)
(86) Internationale Anmeldenummer: EP9400576
(87) Internationale Veröffentlichungsnummer: WO9424044

(56) Entgegenhaltungen:
- EP-A- 0 487 256
- DE-A- 2 651 442
- FR-A- 2 255 367
- FR-A- 2 419 252
- FR-A- 2 528 447
- GB-A- 1 575 792
- TENSIDE Bd. 23, Nr. 2 , April 1986 , MUNCHEN DE Seiten 73 - 75 G. HELLER, A. PAWEL 'Peroxoborate'

## Beschreibung

Die Erfindung richtet sich auf umhüllte Natriumpercarbonatpartikel, deren Umhüllung eine persauerstoffhaltige Borverbindung enthält, welche dem Natriumpercarbonat eine hohe Lagerstabilität verleiht. Weitere Gegenstände betreffen ein Verfahren zur Herstellung der umhüllten Natriumpercarbonatpartikel durch Aufbringen einer oder mehrerer Hüllkomponenten, insbesondere in Form einer diese enthaltenden wäßrigen Lösung, auf das zu umhüllende Natriumpercarbonat, sowie erfindungsgemäße umhüllte Natriumpercarbonatpartikel enthaltende Wasch-, Reinigungs- und Bleichmittelzusammensetzungen.

Natriumpercarbonat (2 Na₂CO₃ · 3 H₂O₂) findet als Aktivsauerstoffkomponente in Wasch-, Bleich- und Reinigungsmitteln Verwendung. Aufgrund der ungenügenden Lagerstabilität des Natriumpercarbonats in warm-feuchter Umgebung sowie in Gegenwart verschiedener Wasch- und Reinigungsmittelkomponenten muß Natriumpercarbonat gegen den Verlust an Aktivsauerstoff (Oₐ) stabilisiert werden. Ein wesentliches Prinzip zur Stabilisierung besteht darin, die Natriumpercarbonatteilchen mit einer Hülle aus stabilisierend wirkenden Komponenten zu umgeben: So ist bekannt, Natriumpercarbonat mit Paraffin oder Polyethylenglykol zu überziehen, wodurch aber keine ausreichende Langzeitstabilität erreicht und zusätzlich die Wasserlöslichkeit in unerwünschter Weise vermindert wird. Auch die Ausbildung einer Hülle aus Alkalisilikat auf den Natriumpercarbonatteilchen, wie sie in der DE-OS 26 52 776 vorgeschlagen wird, führt zu keiner ausreichenden Stabilisierung und zusätzlich zu einem unerwünschten Anteil an unlöslichen Bestandteilen. Gemäß den aus der DE-OS 24 17 572 bzw. DE-OS 26 22 610 bekannten Verfahren werden als Hüllkomponenten Natriumsulfat und Natriumcarbonat bzw. Natriumsulfat, Natriumcarbonat und Natriumsilikat verwendet, wobei die Verfahren darauf beruhen, eine Lösung der Hüllkomponenten in einem Wirbelschichttrockner auf Natriumpercarbonatteilchen aufzusprühen. Für eine praxisnahe Stabilisierung ist eine hohe Hüllmaterialmenge erforderlich, was dementsprechend zu einer großen Minderung des Aktivsauerstoffgehalts führt.

Während aus der DE-PS 28 00 916 bekannt ist, zur Stabilisierung von Natriumpercarbonat ein Hüllmaterial zu verwenden, das mindestens eine Borverbindung aus der Metaborsäure, Orthoborsäure und Tetraborsäure umfassende Gruppe enthält, wird die damit erzielbare Stabilisierungswirkung in der DE-OS 33 21 082 ausweislich der dort angegebenen Vergleichsbeispiele als unzureichend bezeichnet und demgegenüber Natriumpercarbonat mit einer Natriumborat enthaltenden Hülle als vorteilhaft herausgestellt. Wie die Erfinder der vorliegenden Anmeldung beim Nacharbeiten von Beispielen der DE-OS 33 21 082 feststellten, mußten, um eine ausreichende Stabilität zu erzielen, das Borat und gegebenenfalls weitere Hüllkomponenten in einer solchen Menge in der Hülle enthalten sein, daß der verfügbare Aktivsauerstoffgehalt des so stabilisierten Natriumpercarbonats stets unter 14 Gew.-% lag. Eine Weiterentwicklung der Stabilisierung unter Verwendung von Boraten wird in der EP-A 0 487 256 beschrieben, jedoch ist das dort offenbarte Coatungsverfahren mindestens zweistufig und somit technisch aufwendig.

Schließlich lehrt die DE-AS 24 58 326 ein Verfahren zum Stabilisieren von Natriumpercarbonat, wobei die Lagerstabilität des reinen Produktes als auch in Mischung mit Reinigungsmitteln erhöht wird: Hierbei wird das Natriumpercarbonat mit einer hydrophoben flüssigen organischen Verbindung, welcher Natriumperboratpulver zugesetzt wird, überzogen. Nachteilig an diesem Verfahren ist das Erfordernis, eine hydrophobe flüssige organische Verbindung einsetzen zu müssen, welche ggf. zwecks besserer Handhabung mit einem niederen Alkohol verdünnt werden muß; zudem sind die Aufwandmengen an Beschichtungschemikalien, nämlich 5 bis 20 Gew.-% Natriumperborat und 5 bis 10 Gew.-% hydrophobe organische Verbindung, jeweils bezogen auf Natriumpercarbonat, sehr hoch.

Natriumpercarbonat-Schichtpartikel, die aus einem Natriumpercarbonatkern und einer Umhüllung aus Natriumperborat der allgemeinen Formel NaBO₂ · H₂O₂ · n H₂O, wobei n kleiner 3 ist, besteht, sind aus der DE-PS 26 51 442 bekannt; gemäß der DE-PS 27 12 139 kann die Umhüllung zusätzlich Natriumsilikat und andere wasserbindende Stoffe enthalten. Zur Herstellung der genannten Natriumpercarbonat-Schichtpartikel wird Natriumpercarbonat zunächst mit so wenig Wasser oder einer wäßrigen Natriumsilikatlösung benetzt, daß die Tetrahydratbildung des Natriumperborats nicht erreicht wird, und anschließend mit entwässertem Natriumperborat belegt. Eine Weiterbildung des zuvor skizzierten Verfahrens ist der DE-PS 28 10 379 zu entnehmen: Hierbei wird Natriumpercarbonat mit einer wäßrigen Lösung von Natriumperborat, die 50 bis 500 g Natriumperborattetrahydrat pro 1 Lösung bei 40 bis 60 °C enthält, und einer Natriumsilikatlösung besprüht und anschließend das eingeführte Wasser ganz oder teilweise wieder entfernt.

Das zuvor skizzierte Verfahren läßt sich, wie in der noch nicht veröffentlichten DE-Patentanmeldung P 43 06 399.3 gelehrt wird, technisch wesentlich vereinfachen, indem im Naßverfahren hergestelltes Natriumpercarbonat in einer Fest-Flüssig-Trennvorrichtung nach zumindest teilweiser Abtrennung der Mutterlauge mit einer Natriumperborat (NaBO₂ · H₂O₂) enthaltenden Lösung gewaschen wird. Trotz geringer Beschichtungsmenge wird eine hohe Aktivsauerstoffstabilität bei der Lagerung im Gemisch mit einem üblichen zeolithhaltigen Waschmittelturmpulver erhalten.

Gegenüber einer Umhüllung von Natriumpercarbonat mit Boraten oder Borsäure, hat eine Perboratmono- oder tetrahydrat enthaltende Umhüllung den Vorteil, daß damit der Aktivsauerstoffgehalt der Natriumpercarbonatpartikel kaum gemindert wird.

Aufgabe der vorliegenden Erfindung ist, die Stabilisierung von Natriumpercarbonat unter Verwendung neuer persauerstoffhaltiger Borverbindungen weiter zu verbessern und neue umhüllte Natriumpercarbonatpartikel bereitzustellen, welche bei gleichem Borgehalt in Mischung mit Waschmittelbestandteilen eine höhere Aktivsauerstoffstabilität bei der Lagerung gewährleisten als vorbekannte, eine perborathaltige Umhüllung aufweisende Natriumpercarbonatpartikel.

Gefunden wurden umhüllte Natriumpercarbonatpartikel, bestehend aus einem Kern aus im wesentlichen Natriumpercarbonat und einer Umhüllung, welche mindestens eine persauerstoffhaltige Borverbindung enthält, welche dadurch gekennzeichnet sind, daß als persauerstoffhaltige Borverbindung ein oder mehrere Reaktionsprodukte aus der Umsetzung eines Dialkalimetalltetraborats oder Alkalimetallpentaborats mit wäßrigem Wasserstoffperoxid anwesend sind.

Der Kern der umhüllten Partikel besteht im wesentlichen aus Natriumpercarbonat. Unter dem Begriff "im wesentlichen" wird verstanden, daß das Natriumpercarbonat produktionsbedingte Nebenbestandteile, wie beispielsweise Soda und in geringer Menge Kochsalz sowie Kristallisationsverzögerer, beispielsweise ein Metaphosphat oder eine Polycarbonsäure und übliche Stabilisatoren, wie beispielsweise Magnesiumsalze und Natriumsilikat enthalten kann. Eingeschlossen unter dem Begriff "im wesentlichen" wird auch Natriumpercarbonat, das bereits eine Umhüllung aus stabilisierend wirkenden Komponenten, beispielweise ausgewählt aus der Reihe der Phosphonate, Phosphate, Soda, Wasserglas, Magnesiumsalze, Aminocarboxylate und Aminophosphonate sowie polymerer Hydroxycarboxylate enthält. Im Prinzip kann es sich bei gegebenenfalls bereits anwesenden Hüllkomponenten auch um bekannte Borverbindungen handeln, was aber weniger zweckmäßiger erscheint, sofern umhüllte Natriumpercarbonatpartikel mit einem niedrigen Borgehalt hergestellt werden sollen.

Das im erfindungsgemäßen Verfahren einzusetzende Natriumpercarbonat kann nach einem üblichen Verfahren hergestellt worden sein. Zu den üblichen Herstellverfahren zählen insbesondere sogenannte Naßverfahren, wobei Soda und Wasserstoffperoxid in wäßriger Phase umgesetzt und Natriumpercarbonat zur Kristallisation gebracht wird, sogenannte Sprühverfahren, wobei eine Soda und Wasserstoffperoxid enthaltende wäßrige Lösung in einem Wirbelschichttrockner auf Natriumpercarbonatkeime aufgesprüht wird sowie sogenannte Trockenverfahren, wobei eine konzentrierte Wasserstoffperoxidlösung mit wasserfreier Soda zur Reaktion gebracht wird. Sofern erwünscht, kann sich an ein übliches Herstellungsverfahren ein übliches Coatungsverfahren anschließen.

Die erfindungsgemäßen umhüllten Natriumpercarbonatpartikel enthalten in ihrer stabilisierenden Hülle persauerstoffhaltige Reaktionsprodukte, wie sie aus der Umsetzung eines Dialkalimetalltetraborats oder Alkalimetallpentaborats mit wäßrigem Wasserstoffperoxid entstehen und unter üblichen Trocknungsbedingungen damit umhüllter Natriumpercarbonatpartikel teilweise oder vollständig entwässert werden; mit der Trocknung und Entwässerung können gleichzeitig Schmelzprozesse einhergehen.

Ob es sich bei den resultierenden persauerstoffhaltigen Borverbindungen um reine Addukte von Wasserstoffperoxid an das Tetra- oder Pentaborat oder um Verbindungen mit dem Strukturelement -B-O-O-H oder -B-O-O-B- handelt, ist derzeit nicht bekannt. Es wird auch nicht ausgeschlossen, daß es während des herstellungsbedingten Trocknungsprozesses gegebenenfalls teilweise zu einer Disproportionierung des/der persauerstoffhaltigen Tetra- und Pentaborate kommt, so daß in der Hülle gegebenenfalls eine Borsäure und ein Perborat mit dem vom sogenannten Natriumperboratmonohydrat bekannten Strukturelement der Formel 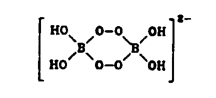 nebeneinander vorliegen.

Die zur Bildung der vorgenannten persauerstoffhaltigen Borverbindungen eingesetzten Tetra- und Pentaborate weisen gemäß Ullmann's Encyclopedia of Industrial Chemistrie, 5. ed. (1985), Vol. A4, 270 folgende Struktur des Anions auf:

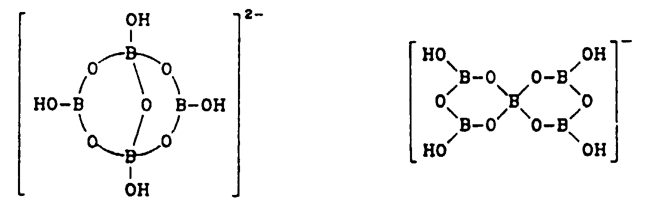

Das Tetra- und Pentaborat enthalten als Kation Lithium, Natrium oder Kalium, wobei Natrium bevorzugt wird.

Bevorzugte umhüllte Natriumpercarbonatpartikel enthalten in der Umhüllung als persauerstoffhaltige Borverbindung ein sogenanntes Perborax der allgemeinen Formel Na₂B₄O₇ · n H₂O₂ · m H₂O, wobei n eine ganze Zahl von 1 bis 4 und m eine ganze Zahl von 0 bis 9 bedeuten. Vorzugsweise sind pro Mol Tetraborat 2 bis 4 Mol Wasserstoffperoxid und 0 bis 2 Mol Wasser gebunden; besonders bevorzugt enthält die Umhüllung im wesentlichen Na₂B₄O₇ · 4 H₂O₂.

Die Umhüllung kann außer den erfindungsgemäßen persauerstoffhaltigen Perborverbindungen, wie insbesondere Perborax der allgemeinen Formel Na₂B₄O₇ · 4 H₂O₂, in gleichmäßiger Verteilung zusätzlich andere bekannte stabilisierend wirkende Hüllkomponenten enthalten, beispielsweise solche wie sie im einleitenden Teil bereits erwähnt wurden. Sofern erwünscht, können sich auf der erfindungsgemäßen Umhüllung weitere Hüllschichten befinden, welche andere Stabilisatoren als die erfindungsgemäß eingesetzten persauerstoffhaltigen Perborverbindungen enthalten, ferner gegebenenfalls Hüllschichten, enthaltend einzelne Bestandteile üblicher Wasch- und Reinigungsmittelzusammensetzungen, beispielsweise Zeolithe. Diese zusätzlichen Schichten können auf die erfindungsgemäß umhüllten Natriumpercarbonatpartikel in üblicher Weise, also insbesondere mittels Sprüh-, Misch- und Granulationsverfahren aufgebracht worden sein.

Die erfindungsgemäß umhüllten Natriumpercarbonatpartikel können eine recht unterschiedliche Menge Hüllmaterial aufweisen. Obgleich Hüllmengen von 1 bis über 30 Gew.-%, bezogen auf Natriumpercarbonat, möglich sind, hat sich in der Praxis eine Hüllmenge zwischen 1 und 10 Gew.-% und vorzugsweise zwischen 2 und 6 Gew.-% als vorteilhaft erwiesen. Mit diesen begrenzten Mengen wird einerseits eine gute Stabilisierung des Natriumpercarbonats gegen den Verlust an Aktivsauerstoff während der feucht-warmen Lagerung in Gegenwart üblicher Wasch-, Reinigungs- und Bleichmittelzusammensetzungen erreicht und gleichzeitig bleibt der Borgehalt im umhüllten Natriumpercarbonat auf niedrigem Niveau.

Wie bereits angesprochen, kann die ein- oder mehrschichtige Umhüllung der erfindungsgemäßen Natriumpercarbonatpartikel außer den Reaktionsprodukten aus Wasserstoffperoxid mit einem Tetra- oder Pentaborat auch andere Hüllkomponenten enthalten; zweckmäßigerweise enthält die gesamte Umhüllung mehr als 50 Gew.-% und insbesondere mehr als 70 Gew.-% der genannten Reaktionsprodukte aus Wasserstoffperoxid mit einem Tetra- oder Pentaborat und weniger als 50 Gew.-% und insbesondere weniger als 30 Gew.-% an anderen stabilisierend wirkenden Verbindungen. Erfindungsgemäß umhüllte Natriumpercarbonatpartikel mit einer einzigen Hüllschicht, welche im wesentlichen nur die erfindungsgemäß zu verwendenden persauerstoffhaltigen Borverbindungen enthalten, weisen in Gegenwart von Waschmittelturmpulvern eine außergewöhnlich hohe Lagerstabilität auf, wie sie bei gleichem Borgehalt unter alleiniger Verwendung von üblichem Perborat nicht erhalten wird. Dies ist äußerst überraschend, weil Perborax der Formel Na₂B₄O₇ · 4 H₂O₂ als solches weniger stabil ist als beispielsweise Natriumperboratmonohydrat.

Die erfindungsgemäß umhüllten Natriumpercarbonatpartikel sind erhältlich durch Aufbringen mindestens einer persauerstoffhaltigen Borverbindung und bei Bedarf weiterer Hüllkomponenten, vorzugsweise unter Verwendung einer die Hüllkomponenten enthaltenden wäßrigen Lösung, auf im wesentlichen aus Natriumpercarbonat bestehende Partikel und, soweit notwendig, Trocknen der resultierenden feuchten Partikel. Das Verfahren ist dadurch gekennzeichnet, daß als persauerstoffhaltige Borverbindung ein oder mehrere Reaktionsprodukte aus der Umsetzung eines Dialkalimetalltetraborats oder Alkalimetallpentaborats mit wäßrigem Wasserstoffperoxid verwendet werden.

Vorzugsweise werden die Hüllkomponenten in Form einer oder mehrerer wäßriger Lösungen auf die Natriumpercarbonatpartikel aufgebracht. Zweckmäßigerweise wird unmittelbar das Reaktionsgemisch aus der Umsetzung eines Tetraborats oder Pentaborats mit Wasserstoffperoxid verwendet.

Sofern erwünscht, können die aktivsauerstoffhaltigen Borverbindungen aus dem Reaktionsgemisch durch teilweises oder vollständiges Verdampfen anwesenden Wassers in Form einer weiter konzentrierten Lösung oder gar als Feststoff gewonnen und für das erfindungsgemäße Verfahren verwendet werden. Zweckmäßigerweise wird das Reaktionsgemisch unmittelbar so hergestellt, daß die gewünschte Konzentration an persauerstoffhaltigen Borverbindungen erhalten wird. Aufgrund der hohen Löslichkeit der Reaktionsprodukte von Tetra- und Pentaboraten mit Wasserstoffperoxid gelangt man zu hochkonzentrierten Lösungen der persauerstoffhaltigen Borverbindungen. Derartige Lösungen haben den Vorteil, daß es beim Aufbringen derselben auf Natriumpercarbonatpartikel mittels einer Sprühdüse nicht zu Verstopfungen derselben und damit Betriebsstörungen kommt; gleichzeitig muß nur eine geringe Menge Wasser im Rahmen des Trocknungsprozesses entfernt werden. Bei der Herstellung des Reaktionsgemischs werden die Reaktionspartner in einer solchen Menge eingesetzt, daß daraus ein Atomverhältnis Bor zu Aktivsauerstoff von 1 zu 0,2 bis 1 zu 1,5 resultiert; bevorzugt wird jedoch ein Atomverhältnis Bor zu Aktivsauerstoff von 1 zu 0,5 bis 1 zu 1,25 und insbesondere 1 zu im wesentlichen 1. Besonders bevorzugt enthält die auf die Natriumpercarbonatpartikel aufzubringende Lösung ein Perborax der allgemeinen Formel Na₂B₄O₇ · n H₂O₂, wobei n für eine ganze Zahl von 1 bis 4, vorzugsweise 2 bis 4 und insbesondere etwa 4, steht. Bei Verwendung einer Na₂B₄O₇ · 4 H₂O₂ enthaltenden Lösung ist es vorteilhaft, wenn die Lösung zusätzlich einen geringen Überschuß an Wasserstoffperoxid aufweist, entsprechend einem Atomverhältnis von Bor zu Aktivsauerstoff von etwa 1 zu 1,05 bis 1,15. Derartige Lösungen lassen sich in einfacher Weise dadurch erhalten, daß in eine wäßrige Wasserstoffperoxidlösung unter Rühren Borax eingetragen wird. Auf die genannte Weise lassen sich Lösungen mit beispielsweise 20 bis 50 Gew.-%, insbesondere 25 bis 40 Gew.-%, Perborax der Formel Na₂B₄O₇ · n H₂O₂, wobei n eine ganze Zahl von 2 bis 4 bedeutet, für das erfindungsgemäße Verfahren bereitstellen.

Die eine erfindungsgemäß zu verwendende persauerstoffhaltige Borverbindung läßt sich mittels üblicher Verfahren ein oder mehrstufig sowie diskontinuierlich oder kontinuierlich auf im wesentlichen aus Natriumpercarbonat bestehende Partikel aufbringen. Die zu umhüllenden Partikel können hierbei entweder trocken sein oder Restfeuchte aus dem Herstellungsverfahren enthalten; einsetzbar ist somit auch beispielsweise zentrifugenfeuchtes oder partiell getrocknetes Natriumpercarbonat. Durch Mischen von oberflächlich feuchtem Natriumpercarbonat mit pulverförmigem Perborax und, soweit notwendig, anschließendem Trocknen lassen sich erfindungsgemäße umhüllte Natriumpercarbonatpartikel erhalten. Vorteilhafter ist es aber, eine Lösung der Hüllkomponenten auf Natriumpercarbonatpartikel aufzubringen. Geeignete Verfahren sind beispielsweise: Aufsprühen einer Lösung auf die Partikel unter gleichzeitigem Mischen; geeignet sind beispielsweise mit einer Sprühvorrichtung ausgestattete Mischer wie Drehrohre, Taumelmischer, Granulierteller. Eine Alternative zur obengenannten Ausführungsform besteht auch darin, Natriumpercarbonat, wie es in einem Naßverfahren erzeugt wurde, mit einer eine erfindungsgemäße persauerstoffhaltige Borverbindung enthaltenden wäßrigen Lösung in einer Waschvorrichtung, etwa einer Fest-Flüssig-Trennvorrichtung zu behandeln und nach Abtrennung überschüssiger Lösung das so behandelte Produkt zu trocknen; diese Ausführungsform entspricht jener der noch nicht veröffentlichten DE-Patentanmeldung P 43 06 399.3, wobei im Verfahren der genannten älteren Patentanmeldung aber eine Natriumperborat (NaBO₂ · H₂O₂) enthaltende Lösung eingesetzt wird. Eine besonders zweckmäßige Ausgestaltung des erfindungsgemäßen Verfahrens besteht darin, die wäßrige Lösung in einer Wirbelschichtvorrichtung auf die darin in fluidisiertem Zustand gehaltenen zu umhüllenden Partikel aufzusprühen. Die mit der aufgesprühten Lösung befeuchteten Partikel werden gleichzeitig oder anschließend getrocknet. Bei Verwendung einer Wirbelschichtvorrichtung können das Aufsprühen und die Trocknung parallel nebeneinander erfolgen, indem zur Fluidisierung auf Trocknungstemperatur erhitzte Luft verwendet wird.

Die die erfindungsgemäß zu verwendenden persauerstoffhaltigen Borverbindungen und gegebenenfalls weitere Hüllkomponenten enthaltende Lösung kann beim Aufsprühen Raumtemperatur oder eine Temperatur bis etwa 60 °C aufweisen. Bei Verwendung besonders hochkonzentrierter Lösungen ist es zweckmäßig, diese in erwärmtem Zustand, vorzugsweise 30 bis 50 °C, einzusetzen. Im Falle der Herstellung der zu verwendenden Lösung aus einem Tetraborat oder Pentaborat und Wasserstoffperoxid unmittelbar vor der Verwendung derselben wird die Temperatur der Lösung aufgrund der Lösungs- und Reaktionswärme etwa in dem genannten Bereich liegen. Anstelle der Herstellung der Lösung aus den Reaktionspartnern kann diese auch durch Auflösen von Perborax, wie es beispielsweise in der DE-PS 548 432 beschrieben wird und der Bruttoformel von etwa Na₂B₄O₇ · 4 H₂O₂ entspricht, in Wasser erzeugt werden; bei Raumtemperatur kann bis zu 1 kg Perborax in 1 l Wasser gelöst werden.

Die Trocknung des durch Besprühen erhaltenen feuchten umhüllten Natriumpercarbonats erfolgt unter Bedingungen wie sie bei der Trocknung von Natriumpercarbonat allgemein üblich sind. Die Trocknungstemperatur wird somit im Bereich zwischen 30 und 90 °C, vorzugsweise zwischen 50 und 80 °C und insbesondere zwischen 50 und 70 °C, liegen. Unter Trocknungstemperatur wird hierbei die Temperatur der zu trocknenden Partikel verstanden. Im Falle der besonders bevorzugten Durchführung des Verfahrens in einem Wirbelschichttrockner liegt somit die Wirbelschichttemperatur im Bereich der vorgenannten Temperaturen; die Eintrittstemperatur des Trocknungsgases in den Wirbelschichttrockner wird demgemäß oberhalb der Wirbelschichttemperatur liegen.

Die erfindungsgemäß umhüllten Natriumpercarbonatpartikel lassen sich als Bleichkomponente in Wasch-, Reinigungs- und Bleichmittelzusammensetzungen verwenden. Erfindungsgemäß umhüllte Natriumpercarbonatpartikel enthaltende Wasch-, Reinigungs- und Bleichmittelzusammensetzungen zeichnen sich dadurch aus, daß das darin enthaltene Natriumpercarbonat eine unerwartet hohe Lagerstabilität aufweist, so daß es während der üblichen Lagerung derartiger Mittel nur zu einem sehr langsamen Verlust an Aktivsauerstoff kommt. Die Lagerstabilität erfindungsgemäß umhüllten Natriumpercarbonats in den genannten Mitteln übersteigt jene, welche mit vorbekannten umhüllten Natriumpercarbonatpartikeln bei vergleichbarer Hüllmenge und hohem Ausgangs-Oₐ-Gehalt erhalten wurde.

Die erfindungsgemäß umhülltes Natriumpercarbonat enthaltenden Wasch-, Reinigungs- und Bleichmittelzusammensetzungen bestehen aus 1 bis 99 Gew.-% des umhüllten Natriumpercarbonat und aus in der restlichen Menge bis 100 Gew.-% anderen üblichen Komponenten derartiger Mittel. Während in Waschmitteln der Gehalt an Natriumpercarbonat in der Regel 20 Gew.-% nicht übersteigt, kann er in Bleichmitteln und Reinigungsmitteln deutlich höher liegen.

Die erfindungsgemäß umhülltes Natriumpercarbonat enthaltenden Wasch-, Reinigungs- und Bleichmittelzusammensetzungen enthalten außer der genannten Aktivsauerstoffverbindung für derartige Mittel übliche weitere Komponenten in üblicher Konzentration. Unter den weiteren Komponenten sind insbesondere zu nennen:
1. Oberflächenaktive Mittel aus der Reihe der kationischen, anionischen, nicht ionischen, amphoteren oder ampholytischen oberflächenaktiven Mittel.
2. Anorganische und/oder organische Builder, deren Hauptwirkung darin besteht, die für die Härte des Wassers verantwortlichen Metallionen zu sequestrieren beziehungsweise komplexieren, beispielsweise Zeolithe, Polyphosphate, Aminopolyessigsäuren und Aminopolyphosphonsäuren sowie Polyoxycarbonsäuren.
3. Alkalische und anorganische Elektrolyte, wie beispielsweise Alkanolamine und Silikate, Carbonate und Sulfate.
4. Bleichaktivatoren aus der Reihe der N-Acyl-verbindungen und O-Acyl-verbindungen, beispielsweise Tetraacetylethylendiamin (TAED).
5. Weitere Bestandteile der Mittel können sein, Stabilisatoren für Peroxide, wie insbesondere Magnesiumsalze, Antidepositionsmittel, optische Aufheller, Schauminhibitoren, Enzyme, Desinfektionsmittel, Korrosionsinhibitoren, Duftstoffe, Farbstoffe und Mittel zur Regulierung des pH-Wertes. Bezüglich einzelner unter die Stoffklassen 1 bis 5 zählender Verbindungen wird beispielhaft auf die DE-OS 33 21 082, Seiten 14-30 verwiesen.

Die erfindungsgemäß umhüllten Natriumpercarbonatpartikel weisen sowohl per se als auch in Abmischung mit Wasch-, Reinigungs- und Bleichmittelzusammensetzungen eine überraschend hohe Aktivsauerstoffstabilität auf. Diese hohe Stabilisierung wird überraschenderweise mit einer Hüllmaterialmenge im Bereich von wenigen Prozent, bezogen auf Natriumpercarbonat, erzielt. Es war zwar bekannt, daß Borsäuren, Borate und Natriumperborat als Hüllkomponente eine gute Wirksamkeit entfalten, jedoch übersteigt die Wirksamkeit der erfindungsgemäß vorzugsweise zu verwendenden persauerstoffhaltigen Borverbindungen diejenige der vorbekannten Borverbindungen. Das erfindungsgemäße Verfahren läßt sich in technisch einfacher Weise durchführen: Aufgrund der sehr hohen Löslichkeit von Perborax und anderen erfindungagemäß zu verwendenden persauerstoffhaltigen Borverbindungen kann eine wirksame Hüllschicht in einer einzigen Prozeßstufe erzielt werden. Ferner werden betriebsbedingte Störungen durch Verstopfen der Düse vermieden; zudem wird der Energieaufwand für die Trocknung sehr niedrig gehalten.

Die Erfindung wird anhand der nachfolgenden Beispiele weiter erläutert.

### Beispiel 1

Natriumpercarbonat, hergestellt durch Umsetzen von Soda mit Wasserstoffperoxid in wäßriger Phase, mit einem Aktivsauerstoffgehalt (Oₐ) von 14,2 Gew.-% wurde in einem Mischer mit einer Perborax der allgemeinen Formel Na₂B₄O₇ · 4 H₂O₂ enthaltenden Lösung umhüllt:

Durch Auflösen von 100,2 g Borax (Na₂B₄O₇ · 10 H₂O) in 115,4 g einer 35 gew.-%igen wäßrigen Wasserstoffperoxidlösung unter Rühren und mäßiger Selbsterwärmung wird die Lösung für die Umhüllung erzeugt. Die Lösung enthält 41 Gew.-% Na₂B₄O₇ · 4 H₂O und 2,2 Gew.-% H₂O₂; das Atomverhältnis Bor und Aktivsauerstoff in der Lösung beträgt 1 zu 1,13.

1500 g Natriumpercarbonat werden in einem Pflugschar-Labormischer mit 183 g der vorgenannten Lösung besprüht, das feuchte Produkt in einem Wirbelschichttrockner bei 60 °C getrocknet.

Oₐ-Gehalt des umhüllten Natriumpercarbonats: 14,4 Gew.-%; Borgehalt des umhüllten Natriumpercarbonats: 0,61 Gew.-%, berechnet aus aufgebrachter Menge Na₂B₄O₇ · 4 H₂O₂ und bezogen auf umhülltes Natriumpercarbonat. Die Oₐ-Stabilität des einem handelsüblichen zeolithhaltigen Waschmittelturmpulver (Persil Supra TP) zugemischten umhüllten Natriumpercarbonats - 15 Gew.-teile umhülltes Natriumpercarbonat und 85 Gew.-teile Turmpulver - bei feucht-warmer Lagerung des Gemischs in Waschmittelpakten folgt aus der Tabelle.

### Beispiel 2

Natriumpercarbonat (gemäß Beispiel 1) wurde in einem Wirbelschichttrockner mit einer Perborax (Na₂B₄O₇ · 4 H₂O₂) enthaltenden Lösung besprüht und gleichzeitig getrocknet.

Herstellung der Lösung durch Auflösen von Borax in 19,5 gew.-%iger H₂O₂-Lösung. Gehalt an Na₂B₄O₇ · 4 H₂O₂ 31,2 Gew.-%; Atomverhältnis Bor zu Aktivsauerstoff gleich 1 zu 1. Die Lösung wurde mittels einer Zweistoffdüse bei einer Wirbelschichttemperatur von 50 °C (Eintrittstemperatur der Trocknungsluft 110 °C) auf das Percarbonat gesprüht. Die Sprühmenge entsprach 5 Gew.-Teile Perborax pro 100 Gew.-teile Natriumpercarbonat; Oₐ-Gehalt des umhüllten Natriumpercarbonats 14,2 Gew.-%. Die Oₐ-Stabilität des einem Waschmittelpulver zugemischten umhüllten Natriumpercarbonats folgt aus der Tabelle (Turmpulver und Mischungsverhältnis wie in Beispiel 1).

### Beispiel 3

Beispiel 2 wurde mit den Unterschied wiederholt, daß die Sprühlösung Perborax der Formel Na₂B₄O₇ · 2 H₂O₂ enthielt; Gehalt 28,7 Gew.-%; Atomverhältnis Bor zu Aktivsauerstoff 1 zu 1.

Hüllmenge 5 Gew.-%, bezogen auf Natriumpercarbonat. Oₐ-Gehalt des umhüllten Natriumpercarbonats 14,0 Gew.-%. Die Oₐ-Stabilität in einem Waschmittelturmpulver ist wieder der Tabelle zu entnehmen (Turmpulver und Mischungsverhältnis wie in Beispiel 1.

### Beispiel 4

Zentrifugenfeuchtes Natriumpercarbonat, hergestellt durch Umsetzung von Soda mit Wasserstoffperoxid in wäßriger Phase in Gegenwart von Kochsalz und Natriumhexametaphopsphat und Kristallisation wurde auf der Zentrifuge nach Abtrennen der Mutterlauge mit einer Perborax-Lösung (33 Gew.-%, bezogen auf Na₂B₄O₇ · 4 H₂O₂) in Form einer Wäsche nachbehandelt und anschließend in einem Wirbelschichttrockner getrocknet. Die aufgebrachte Menge Na₂B₄O₇ · 4 H₂O₂ entsprach 2,5 Gew.-%, bezogen auf Natriumpercarbonat, der Borgehalt ca. 0,3 Gew.-%. Oₐ-Gehalt des gecoateten Percarbonats 14,2 Gew.-%. Die Lagerstabilität folgt aus der Tabelle.

### Vergleichsbeispiel 1

Gemäß dem Verfahren der DE-PS 28 00 916 wurde Natriumpercarbonat mit 5 Gew.-% Orthoborsäure, bezogen auf Natriumpercarbonat, umhüllt (analog Beispiel A6 der genannten DE-Patentschrift). Oₐ-Gehalt des umhüllten Natriumpercarbonats 13,4 Gew.-%; Borgehalt, bezogen auf umhülltes Natriumpercarbonat 0,83 Gew.-%. Die Stabilitätsdaten während der Lagerung in der Waschmittelmischung folgen aus der Tabelle.

### Vergleichsbeispiel 2

Natriumpercarbonat wurde mit einer wäßrigen Boraxlösung (Konzentration 35 Gew.%) in einem Mischer (analog Beispiel 1) besprüht, wobei die aufgesprühte Menge Borax 5 Gew.-teile auf 100 Gew.-teile Natriumpercarbonat betrug; anschließend wurde bei 70 °C getrocknet.

Oₐ-Gehalt 13,5 Gew.-%; Borgehalt des umhüllten Percarbonats: 0,55 Gew.-%, berechnet aus aufgebrachtem Borax unter der Annahme, daß bei der Trocknung Borax in Na₂B₄O₇ · 5 H₂O überführt wurde.

### Vergleichsbeispiel 3

Natriumpercarbonat wurde gemäß DE-PS 28 10 379 mit Natriumperborat und Wasserglas umhüllt. Die Hüllmenge entsprach 6 Gew.-% Natriumperboratmonohydrat und 1 Gew.-% Wasserglas. Oₐ-Gehalt des umhüllten Natriumpercarbonats 14,3 Gew.-%; Bor-Gehalt des umhüllten Natriumpercarbonats (berechnet aus aufgebrachter Menge NaBO₂ · H₂O₂) 0,62 Gew.-%. Die Stabilitätsdaten in einer Waschmittelzusammensetzung folgen aus der Tabelle.

Zur Beurteilung der Stabilität wurde umhülltes Natriumpercarbonat der Beispiele und Vergleichsbeispiele jeweils in Abmischung mit einem handelsüblichen phosphatfreien aber zeolithhaltigen Waschmittelturmpulver (Persil Supra TP) - Mischungsverhältnis 15 zu 85 - in geschlossenen Waschmittelpaketen (0,4 l) in einem Klimaschrank bei konstant 30 °C und 80 % relativer Feuchte gelagert. Die Ergebnisse des in üblicher Weise zu Beginn, nach 2, 4 und 8 Wochen Lagerung bestimmten Aktivsauerstoffgehalts der Abmischungen folgen aus der Tabelle. Bei etwa gleichem Borgehalt zeigen erfindungsgemäß umhüllte Natriumpercarbonat-Partikel eine höhere Lagerstabilität als die mit Borsäure, Borax oder Perboratmonohydrat umhüllten Natriumpercarbonatpartikel.

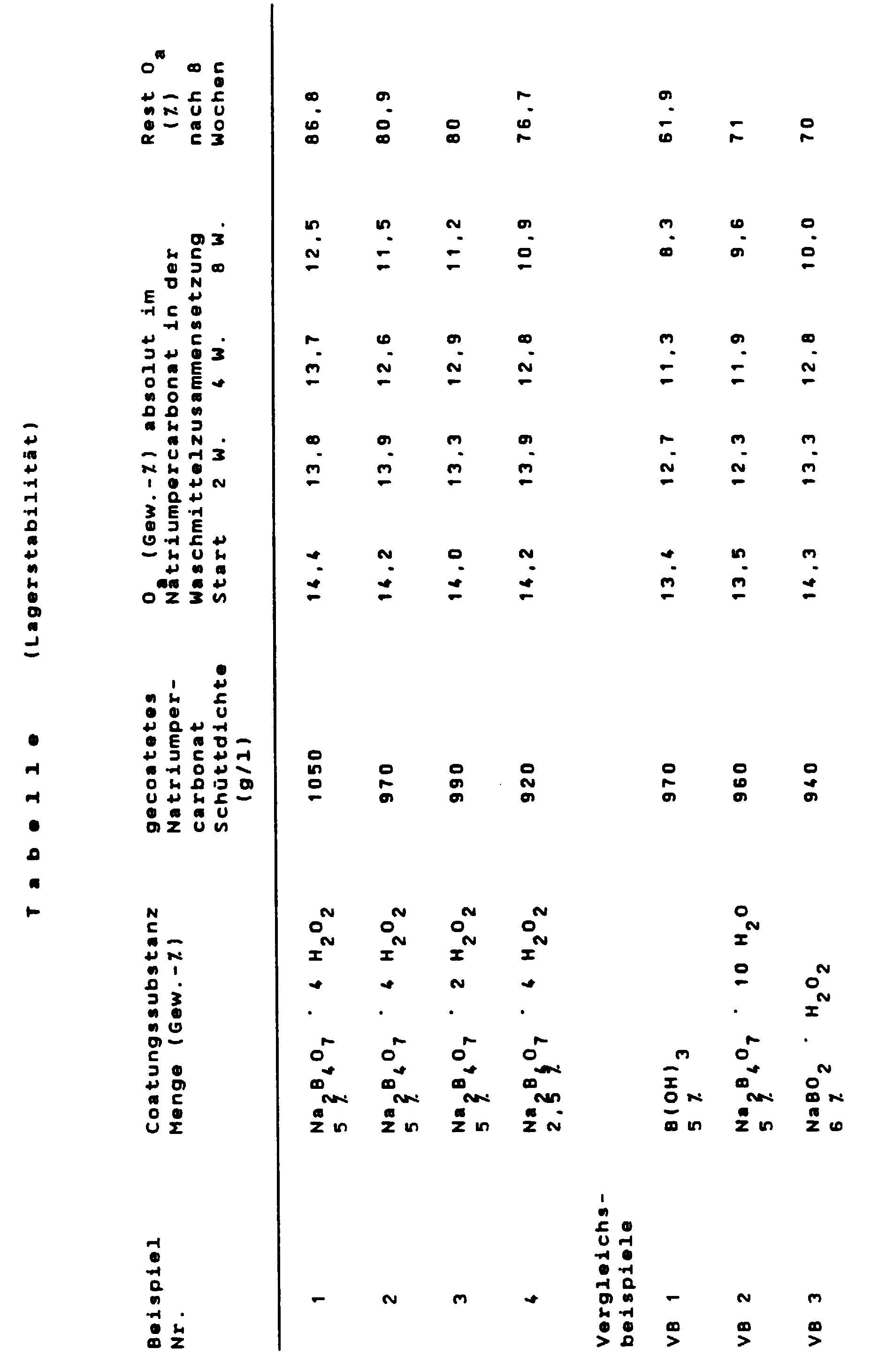

## Patentansprüche

1. Umhüllte Natriumpercarbonatpartikel, bestehend aus einem Kern aus im wesentlichen Natriumpercarbonat und einer Umhüllung, welche mindestens eine persauerstoffhaltige Borverbindung enthält,
dadurch gekennzeichnet,
daß als persauerstoffhaltige Borverbindung ein oder mehrere Reaktionsprodukte aus der Umsetzung eines Dialkalimetalltetraborats oder Alkalimetallpentaborats mit wäßrigem Wasserstoffperoxid anwesend sind.

2. Umhüllte Natriumpercarbonatpartikel nach Anspruch 1,
dadurch gekennzeichnet,
daß die persauerstoffhaltige Borverbindung in der Umhüllung ein Perborax der allgemeinen Formel Na₂B₄O₇ · n H₂O₂ · m H₂O ist, wobei n eine ganze Zahl von 1 bis 4, vorzugsweise 2 bis 4, und m eine ganze Zahl von 0 bis 9, vorzugsweise 0 bis 2, bedeuten.

3. Umhüllte Natriumpercarbonatpartikel nach Anspruch 1 oder 2,
dadurch gekennzeichnet,
daß die auf Natriumpercarbonat bezogene Menge Umhüllung 1 bis 10 Gew.-%, vorzugsweise 2 bis 6 Gew.-%, ausmacht.

4. Umhüllte Natriumpercarbonatpartikel nach einem der Ansprüche 1 bis 3,
dadurch gekennzeichnet,
daß die Umhüllung aus mehr als 50 Gew.-%, vorzugsweise mehr als 70 Gew.-%, der Reaktionsprodukte aus Wasserstoffperoxid mit einem Tetra- oder Pentaborat und weniger als 50 Gew.-%, vorzugsweise weniger als 30 Gew.-%, anderen stabilisierend wirkenden Verbindungen besteht.

5. Verfahren zur Herstellung umhüllter Natriumpercarbonatpartikel, bestehend aus einem Kern aus im wesentlichen Natriumpercarbonat und einer Umhüllung aus einer oder mehreren Hüllkomponenten, darunter mindestens einer persauerstoffhaltigen Borverbindung, durch Aufbringen einer oder mehrerer Hüllkomponenten auf im wesentlichen aus Natriumpercarbonat bestehende Partikel,
dadurch gekennzeichnet,
daß man als persauerstoffhaltige Borverbindung ein oder mehrere Reaktionsprodukte aus der Umsetzung eines Dialkalimetalltetraborats oder Alkalimetallpentaborats mit wäßrigem Wasserstoffperoxid verwendet.

6. Verfahren nach Anspruch 5,
dadurch gekennzeichnet;
daß man zum Aufbringen der Hüllkomponenten auf die Natriumpercarbonatpartikel eine oder mehrere Hüllkomponenten enthaltende wäßrige Lösungen verwendet und die resultierenden feuchten Partikel trocknet.

7. Verfahren nach Anspruch 5 oder 6,
dadurch gekennzeichnet,
daß man eine Reaktionsprodukte der genannten Umsetzung enthaltende wäßrige Lösung verwendet, welche Bor und Aktivsauerstoff im Atomverhältnis von 1 zu 0,2 bis 1 zu 1,5 enthält.

8. Verfahren nach Anspruch 7,
dadurch gekennzeichnet,
daß das Atomverhältnis Bor zu Aktivsauerstoff 1 zu 0,5 bis 1 zu 1,25 beträgt.

9. Verfahren nach einem der Ansprüche 6 bis 8,
dadurch gekennzeichnet,
daß die verwendende Lösung ein Perborax der allgemeinen Formel Na₂B₄O₇ · n H₂O₂, wobei n für eine ganze Zahl von 1 bis 4 steht, enthält.

10. Verfahren nach Anspruch 9,
dadurch gekennzeichnet,
daß n in der allgemeinen Formel eine ganze Zahl von 2 bis 4 ist.

11. Verfahren nach einem der Ansprüche 6 bis 10,
dadurch gekennzeichnet,
daß die zu verwendende Lösung 20 bis 50 Gew.-% Perborax der allgemeinen Formel Na₂B₄O₇ · n H₂O₂, wobei n eine ganze Zahl von 2 bis 4 bedeutet, enthält.

12. Verfahren nach Anspruch 11,
dadurch gekennzeichnet,
daß die zu verwendende Lösung 25 bis 40 Gew.-% Perborax der Formel Na₂B₄O₇ · 4 H₂O₂ enthält.

13. Verfahren nach einem der Ansprüche 5 bis 12,
dadurch gekennzeichnet,
daß man eine die persauerstoffhaltige Borverbindung enthaltende wäßrige Lösung entweder in einem Mischer oder in einer Wirbelschichtvorrichtung auf im wesentlichen aus Natriumpercarbonat bestehende Partikel aufsprüht und gleichzeitig oder anschließend die resultierenden feuchten Partikel bei 30 bis 90 °C trocknet.

14. Wasch-, Reinigungs- und Bleichmittelzusammensetzungen, enthaltend umhüllte Natriumpercarbonatpartikel gemäß einem der Ansprüche 1 bis 3 oder erhalten nach einem der Ansprüche 4 bis 13.

## Claims

1. Coated sodium percarbonate particles comprising a core substantially consisting of sodium percarbonate and a coating, which contains at least one peroxy-containing boron compound,
characterised in that
one or more reaction products from the reaction of a dialkali metal tetraborate or an alkali metal pentaborate with aqueous hydrogen peroxide are present as the peroxy-containing boron compound.

2. Coated sodium percarbonate particles according to claim 1,
characterised in that
the peroxy-containing boron compound in the coating is a perborax of the general formula Na₂B₄O₇ · n H₂O₂ · m H₂O, wherein n means an integer from 1 to 4, preferably from 2 to 4, and m means an integer from 0 to 9, preferably from 0 to 2.

3. Coated sodium percarbonate particles according to claim 1 or 2,
characterised in that,
relative to sodium percarbonate, the quantity of coating amounts to 1 to 10 wt.%, preferably 2 to 6 wt.%.

4. Coated sodium percarbonate particles according to one of claims 1 to 3,
characterised in that
the coating consists of more than 50 wt.%, preferably of more than 70 wt.%, of the reaction products prepared from hydrogen peroxide with a tetra- or pentaborate and of less than 50 wt.%, preferably of less than 30 wt.%, of other compounds having a stabilising action.

5. Process for the production of coated sodium percarbonate particles comprising a core substantially consisting of sodium percarbonate and a coating consisting of one or more coating components, at least one of which is a peroxy-containing boron compound, by applying one or more coating components onto particles substantially consisting of sodium percarbonate,
characterised in that
one or more reaction products from the reaction of a dialkali metal tetraborate or an alkali metal pentaborate with aqueous hydrogen peroxide are present as the peroxy-containing boron compound.

6. Process according to claim 5,
characterised in that
aqueous solutions containing one or more coating components are used to apply the shell components onto the sodium percarbonate particles and the resultant moist particles are dried.

7. Process according to claim 5 or 6,
characterised in that
an aqueous solution containing reaction products of the stated reaction is used, which solution contains boron and active oxygen in an atomic ratio of 1:0.2 to 1:1.5.

8. Process according to claim 7,
characterised in that
the atomic ratio of boron to active oxygen is 1:0.5 to 1:1.25.

9. Process according to one of claims 6 to 8,
characterised in that
the solution to be used contains a perborax of the general formula Na₂B₄O₇ · n H₂O₂, wherein n denotes an integer from 1 to 4.

10. Process according to claim 9,
characterised in that
n in the general formula is an integer from 2 to 4.

11. Process according to one of claims 6 to 10,
characterised in that
the solution to be used contains 20 to 50 wt.% of perborax of the general formula Na₂B₄O₇ · n H₂O₂, wherein n denotes an integer from 2 to 4.

12. Process according to claim 11,
characterised in that
the solution to be used contains 25 to 40 wt.% of perborax of the formula Na₂B₄O₇ · 4 H₂O₂.

13. Process according to one of claims 5 to 12,
characterised in that
an aqueous solution containing the peroxy-containing boron compound is sprayed onto the particles substantially consisting of sodium percarbonate either in a mixer or in a fluidised bed apparatus and the resultant moist particles are simultaneously or subsequently dried at 30 to 90°C.

14. Detergent, cleaning and bleaching compositions containing coated sodium percarbonate particles according to one of claims 1 to 3 or obtained according to one of claims 4 to 13.

## Revendications

1. Particules de percarbonate de sodium enrobées, constituées par un noyau essentiellement constitué par du percarbonate de sodium et par un enrobage qui contient au moins un composé borique peroxygéné, caractérisées en ce qu'un ou plusieurs produits de réaction résultant de la réaction entre un tétraborate à double salification par un métal alcalin ou un pentaborate à simple salification par un métal alcalin et du peroxyde d'hydrogène aqueux sont présents comme composé borique peroxygéné.

2. Particules de percarbonate de sodium enrobées selon la revendication 1, caractérisées en ce que le composé borique peroxygéné dans l'enrobage est un perborax de formule générale Na₂B₄O₇ . n H₂O₂ . m H₂O, dans laquelle n signifie un nombre entier compris entre 1 et 4, de préférence entre 2 et 4, et m un nombre entier entre 0 et 9, de préférence entre 0 et 2.

3. Particules de percarbonate de sodium enrobées selon la revendication 1 ou 2, caractérisées en ce que la quantité d'enrobage représente 1 à 10 % en poids, de préférence 2 à 6 % en poids, par rapport au percarbonate de sodium.

4. Particules de percarbonate de sodium enrobées selon une quelconque des revendications 1 à 3, caractérisées en ce que l'enrobage est constitué par plus de 50 % en poids, de préférence par plus de 70 % en poids, des produits de réaction résultant de la réaction entre du peroxyde d'hydrogène et un tétraborate ou un pentaborate et par moins de 50 % en poids, de préférence par moins de 30 % en poids, d'autres composés à action stabilisatrice.

5. Procédé pour la fabrication de particules de percarbonate de sodium enrobées, constituées par un noyau essentiellement constitué par du percarbonate de sodium et par un enrobage contenant un ou plusieurs composants d'enrobage, dont au moins un composé borique peroxygéné, par application d'un ou de plusieurs composants d'enrobage sur des particules essentiellement constituées par du percarbonate de sodium, caractérisé en ce qu'on utilise comme composé borique peroxygéné, un ou plusieurs produits de réaction résultant de la réaction entre un tétraborate à double salification par un métal alcalin ou un pentaborate à simple salification par un métal alcalin et du peroxyde d'hydrogène aqueux.

6. Procédé selon la revendication 5, caractérisé en ce qu'on utilise pour l'application des composants d'enrobaqe sur les particules de percarbonate de sodium des solutions aqueuses contenant un ou plusieurs composants d'enrobage et en ce qu'on sèche les particules humides obtenues.

7. Procédé selon la revendication 5 ou 6, caractérisé en ce qu'on utilise une solution aqueuse contenant des produits de réaction résultant de la réaction mentionnée, ladite solution contenant du bore et de l'oxygène actif dans un rapport atomique compris entre 1 à 0,2 et 1 à 1,5.

8. Procédé selon la revendication 7, caractérisé en ce que le rapport atomique entre le bore et l'oxygène actif est compris entre 1 à 0,5 et 1 à 1,25.

9. Procédé selon une quelconque des revendications 6 à 8, caractérisé en ce que la solution utilisée contient un perborax de formule générale Na₂B₄O₇ . n H₂O₂, dans laquelle n représente un nombre entier compris entre 1 et 4.

10. Procédé selon la revendication 9, caractérisé en ce que n est un nombre entier compris entre 2 et 4 dans la formule générale.

11. Procédé selon une quelconque des revendications 6 à 10, caractérisé en ce que la solution à utiliser contient 20 à 50 % en poids de perborax de formule générale Na₂B₄O₇ . n H₂O₂, dans laquelle n signifie un nombre entier compris entre 2 et 4.

12. Procédé selon la revendication 11, caractérisé en ce que la solution à utiliser contient 25 à 40 % en poids de perborax de formule générale Na₂B₄O₇ . 4 H₂O₂.

13. Procédé selon une quelconque des revendications 5 à 12, caractérisé en ce qu'on pulvérise une solution aqueuse contenant le composé borique peroxygéné, soit dans un mélangeur soit dans un dispositif à lit fluidisé, sur des particules essentiellement constituées par du percarbonate de sodium et en ce qu'on sèche simultanément ou consécutivement les particules humides obtenues entre 30 et 90 °C.

14. Compositions d'agents de lavage, de nettoyage et de blanchiment contenant des particules de percarbonate de sodium enrobées selon une quelconque des revendications 1 à 3 ou obtenues selon une quelconque des revendications 4 à 13.
